# EUROPEAN PATENT SPECIFICATION

(11) **EP 2 827 657 B1**
(45) Date of publication and mention of the grant of the patent: **02.01.2019**
(21) Application number: 13765230.1
(22) Date of filing: 22.01.2013
(51) Int. Cl.: H04W 52/02

(54) **SLEEPING METHOD AND APPARATUS**
SCHLAFVERFAHREN UND VORRICHTUNG
MÉTHODE ET APPAREIL POUR LE SOMMEIL

(30) Priority: 19.03.2012 CN 201210073029
(43) Date of publication of application: 21.01.2015
(73) Proprietor: ZTE Corporation, Shenzhen, Guangdong 518057 (CN)
(72) Inventor: LI, Nan, Guangdong 518057 (CN); LV, Kaiying, Guangdong 518057 (CN); XING, Weimin, Guangdong 518057 (CN); HAN, Zhiqiang, Guangdong 518057 (CN); JIANG, Jing, Guangdong 518057 (CN)
(74) Representative: Mozzi, Matteo
(86) International application number: PCT/CN2013/070815
(87) International publication number: WO 2013/139182

(56) References cited:
- CN-A- 101 331 439
- CN-A- 101 502 044
- CN-A- 102 076 067
- US-A1- 2005 025 081
- US-A1- 2008 232 310
- US-A1- 2010 284 316
- US-A1- 2011 225 440

## Description

### Technical Field

The present invention relates to the field of communications, in particular to a sleeping method and device.

### Background

In the technique of wireless communication, Wireless Local Area Network (WLAN for short) according to Institute for Electrical and Electronic Engineers (IEEE for short) 802.11 standard, has already widely used, which is not only used in various dedicated environments, and laptops, handheld devices and mobile terminals, but is also considered to be the technique for connecting with hot-points of the Internet in the cellular network 3rd Generation Partnership Project (3GPP for short) system. The IEEE 802.11 working group has successively defined a series of WLAN technique standard of 802.11a, 802.11b, 802.11g, etc.; and then other task groups appeared one after another, dedicated in developing specifications relating to existing 802.11 technique improvement, for example, the 802.11n task group proposed the requirement of High Throughput (HT for short), supporting a data rate up to 600 Mbps. The 802.11ac task group has proposed the concept of Very High Throughput (VHT for short), improving the data rate to 1 Gbps, and other 802.11 series protocols also support 802.11ad working at 60GHz and 802.11 ah working under 1 GHz.

The IEEE 802.11 technique supports the power-saving mode. The network structure of IEEE 802.11 comprises: an infrastructure mode that enables a communication device associated with an Access Point, i.e. a non-Access Point station (non-AP STA for short) with another communication device via an Access Point (AP for short), and an Ad hoc mode which does not need the involvement of an access point and may intercommunicate between stations. The power-saving mechanisms of the infrastructure mode and the Ad hoc mode are slightly different; in the infrastructure mode, the access point cannot utilize the power-saving mode; and in the Ad hoc mode, all the stations may utilize the power-saving mode, and data must be sent in consideration of the states of each other. The non-AP station is called Station (STA for short) for short.

In the infrastructure mode, the basic contents of the power-saving mechanism defined by the IEEE 802.11 standard are as follows:
The STA which is a non-AP works in an Active mode and it works in the awake state and the doze state in turn after entering the power-saving mode. The STA may transceive data in the awake state as the same as in the active mode; and in the doze state the STA may not transceive the data and remains working at low power. The AP should be informed whether the STA enters the power-saving mode in a frame control header of a frame sent by the STA itself; if the AP learns that the STA has entered the power-saving mode, data should be buffered for the STA when the STA is dozing, and buffer indication information which is called Traffic Indication Map (TIM for short) is carried in a beacon frame carrying system information, so as to inform the STA having the buffer data.

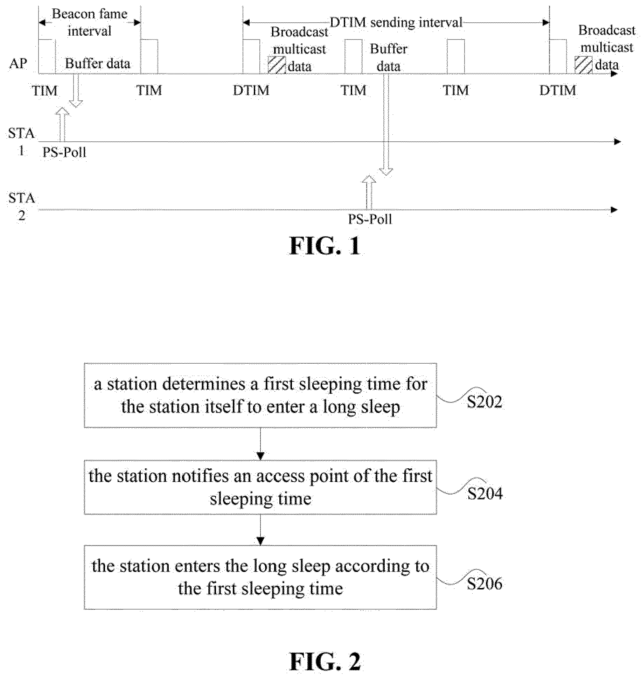

The method for using the TIM to indicate the existence of buffer data for the STA is: a bit map is carried in the TIM, and each bit in the bit map corresponds to an Association identifier (AID for short) of an associated station; and the AP indicates whether there is buffer data corresponding to a certain STA according to whether at least one bit in the bit map corresponding to the AID is set. The TIM also indicates whether there is buffer of a multicast broadcast service on the AP side at the same time. There is a special TIM called Delivery Traffic Indication Map (DTIM). The AP carries a TIM in each beacon frame, but the DTIM is sent only in a fixed time interval; and the difference between the DTIM and the TIM lies in that, after DTIM, the AP will immediately send the buffered multicast broadcast service data before sending unicast data. If any STA associated with the AP enters a power-saving mode, the AP needs to send out all the buffered multicast data and broadcast service data as soon as possible after the DTIM is sent (before the unicast buffered data is sent). Therefore, the station must enter the awake state from the doze state in the moment of DTIM (which may be called waking up) to receive the buffered multicast data and broadcast data after DTIM. Fig. 1 is a schematic diagram of a traditional power-saving mechanism using DTIM and TIM according to the prior art.

In order to save power consumed for receiving buffered multicast data, the prior art also provides a power-saving mechanism aiming at the multicast service, including a Direct Multicast Service and Flexible Multicast Service; the former enables the station to be able to request the access point to send the data of the multicast address to the station by way of unicast mode, and the latter enables the station to be able to request different DTIM sending intervals for different multicast addresses.

An interval between two different continuous beacon frames is divided into a Contention Period and a Contention Free Period. In the contention period, the STA in the power-saving mode should wake up when the TIM is sent, learns that data of the station is buffered at the AP by receiving the TIM, and sends a PS-Poll frame to the AP; on receiving the PS-Poll frame, the AP will immediately send the buffer data to the STA or send an ACK at first to indicate that the AP has received the PS-Poll, and then send the buffer data to the STA after obtaining the channel. In the contention free period, the STA of a non-AP wakes up at the moment when the TIM is sent. If the STA of a non-AP, after receiving the TIM, learns there is buffer data for itself, the STA of a non-AP does not sent the PS-Poll frame to the AP, but keeps awake to wait for the AP to send the buffer data to the STA of a non-AP and then enter the doze state.

At present, many devices having an IEEE 802.11 wireless interface have already been widely commercially used and have high portability, and most of the portable devices are driven by a battery; therefore, it becomes very important to reduce battery consumption and to lengthen battery use life. Especially for Internet of things sensor nodes to which the WLAN technique is applied, which is expected to keep working for years depending on a battery in an unattended environment; therefore, a power-saving mechanism that may effectively save available electric energy is more needed. In the prior art, a station which desires to save power may be in the doze state for a long time without receiving TIM elements sent by the AP. When the station wakes up, it initiatively sends a PS-Poll frame to the AP, asks whether there is buffer data for the station itself. If there is buffer data on the AP side, the AP will immediately send the buffer data to the station or immediately reply an acknowledgement frame, wherein the acknowledgement frame carries information indicating whether there is buffer data for the station. If there is buffer data, the buffer data is sent to the station when the AP obtains a channel access chance subsequently. The above-mentioned power-saving method will be called long sleep for short hereinafter.

However, when the station decides to keep in a doze state for a long time, if the AP is not notified that the station stay doze for a long time, the AP does not know the how long the station will be in a doze state. Therefore possibility that data is discarded because buffer on the AP side is not enough might exist. In addition, in the case of not knowing the state of the station, the AP will still continue to carry service indication information in the TIM for the station, bringing about extra costs.

US 2010/0284316 A1 discloses a method for reducing power consumption in an access point.

US 2011/0225440 A1 relates to a communication method of a terminal and an access point for power saving.

US 2005/0025081 A1 relates to a wireless terminal management method in a base station.

US 2008/0232310 A1 describes methods, devices and systems adapted to enable an eNodeB and a user equipment to negotiate a set of discontinuous reception parameters.

### Summary

The present invention provides a sleeping method and device, so as to at least solve that problem that the AP is not able to learn how long the station will be in a doze state. The possibility that data is discarded because buffer on the AP side is not enough might exist in the prior art.

According to an aspect of the present invention, a sleeping method is provided, comprising: a station determining a first sleeping time for the station to enter a long sleep; the station informing an access point the first sleeping time; and the station entering the long sleep according to the first sleeping time.

Preferably, the station informing the access point of the first sleeping time comprises: the station sending a first radio frame to the access point, wherein the first radio frame carries the first sleeping time.

Preferably, before the station informs the access point of the first sleeping time, the method further comprises: the station sending to the access point capability information about whether the station itself has a capability of long sleep.

Preferably, the station uses the first radio frame to carry the capability information about whether the station itself has a capability of long sleep.

Preferably, the first radio frame comprises one of the following: an association request frame, a reassociation request frame, a channel probe request frame, and a notification frame sent to the access point by the station when entering the long sleep.

Preferably, in the case where the station has the capability of long sleep, the station carries first indication information in the first radio frame, wherein the first indication information is used for indicating, in a traffic indication map (TIM), whether the access point needs to inform the buffer condition of the station.

Preferably, before the station enters a long sleep according to the first sleeping time, the method further comprises: the station receives a second radio frame from the access point, wherein the second radio frame carries a second sleeping time; and the station determines a sleeping time for performing the long sleep according to the second sleeping time.

Preferably, that the station confirms a sleeping time for performing the long sleep according to a second sleeping time comprises: in the case where the first sleeping time is different from the second sleeping time, the second sleeping time is determined to be the sleeping time for staying in the long sleep.

Preferably, before the station receives the second sleeping time from the access point, the method further comprises: the access point sends to the station capability information about whether the access point itself supports a capability that the station enters the long sleep.

Preferably, the access point uses the second radio frame to carry the capability information about whether the access point itself supports the capability that the station enters the long sleep.

Preferably, the second radio frame comprises one of the following: an association response frame, a reassociation response frame, a channel probe response frame, and a response frame sent to the access point by the station when entering the long sleep, and a beacon frame.

Preferably, before the station enters the long sleep according to the first sleeping time or the second sleeping time, the method further comprises: the station sends a notification frame to the access point, wherein the notification frame is used for informing the access point that the station will enter the long sleep according to the first sleeping time or the second sleeping time.

Preferably, before the station enters the long sleep according to the first sleeping time or the second sleeping time, the method further comprises: the station receives a response frame for the notification frame from the access point, wherein the response frame is used for indicating whether the access point allows the station to enter the long sleep; and in the case where the access point allows the station to enter the long sleep, the station performs an operation of entering the long sleep according to the first sleeping time or the second sleeping time.

Preferably, the access point determines whether to allow the station to enter the long sleep according to the number of the stations which are in the long sleep and are associated with the access point.

Preferably, if the notification frame also carries information about a multi-cast broadcast service that the station desires to receive, the access point buffers corresponding multi-cast broadcast service data for the station when the station is in the long sleep.

Preferably, after the station sends the notification frame to the access point, the method further comprises: the access point acquires that the station enters the long sleep; and the access point notifies, in the traffic indication map (TIM), the station of a buffer condition of the station.

Preferably, before the access point notifies the station of the buffer condition thereof in the TIM, the method further comprises: the access point detects whether first indication information from the station is received, wherein the first indication information is used for indicating whether the access point notifies the station of the buffer condition via the TIM; if the detecting result is yes, and the first indication information indicates that the access point notifies the station of the buffer condition thereof in the TIM, the access point performs an operation of notifying the station of the buffer condition thereof in the TIM; if the first indication information indicates that the access point does not notify the station of the buffer condition thereof, the access point does not execute the operation of notifying the station of the buffer condition thereof in the TIM; and if the detecting result is no, the access point only informs, in the TIM, buffer conditions of other long sleep stations which require to be informed of the buffer conditions thereof and the buffer conditions of stations which have not entered a long sleep and are in a power-saving mode, i.e. in the case of having no first indication information about the station, the access point does not notify the buffer condition of the station in the TIM.

Preferably, before the access point notifies the station of the buffer condition thereof in the TIM, the method further comprises: the access point sends to the station the response frame for the notification frame carrying the second indication information, wherein the second indication information is used for indicating whether the access point notifies the station of the buffer condition thereof in the TIM; and when the second indication information indicates that the access point notifies the station of the buffer condition thereof in the TIM, the access point performs an operation of notifying the station of the buffer condition thereof in the TIM.

Preferably, the notification frame comprises one of the following: a direct multicast service request frame, a flexible multicast service request frame, a data frame, a management frame and a control frame, and the response frame comprises one of the following: a direct multicast service response frame, a flexible multicast service response frame, a data frame, a management frame and a control frame.

Preferably, after the station enters the long sleep according to the first sleeping time or the second sleeping time, the method further comprises: in the first sleeping time or the second sleeping time, the station enters the awake state at least once and sends a third radio frame to the access point; the station receives an acknowledgement frame from the access point, wherein indication information used for indicating whether buffer data exists is carried in the acknowledgement frame; and if there is the buffer data, the station receives the buffer data when the access point obtains a channel access chance.

Preferably, after the station receives the buffer data when the station obtains the channel access chance, the method further comprises: the station confirms that the receiving of the buffer data is finished; and the station goes back to the long sleep from the awake state.

Preferably, the first sleeping time or the second sleeping time recounts from the moment when the station goes back to the long sleep.

Preferably, if the station does not enter the awake state during the first sleeping time or the second sleeping time, when the first sleeping time or the second sleeping time expires, the access point does not buffer data for the station any more.

Preferably, the first sleeping time or the second sleeping time is calculated starting from the moment when the station enters the long sleep, and is in units of integer times of the beacon frame interval.

Preferably, after the station enters the long sleep according to the first sleeping time or the second sleeping time, the method further comprises: the station buffers unicast data for the station according to at least one of the following parameters: the sleeping time of the station, the priority of the data, discard strategy of the data and the size of the buffer area of the access point.

Preferably, the long sleep refers to the case where the station is in a doze state of being able to choose to receive or not to receive buffer indication information sent by the access point.

According to an aspect of the present invention, a sleeping method is also provided, comprising: a station receives a first sleeping time from an access point, wherein the first sleeping time is used for indicating time that the station stays in a long sleep, and the station enters the long sleep according to the first sleeping time.

Preferably, that the station receives a first sleeping time from an access point comprises: the station receives the first sleeping time from the access point via a first radio frame, wherein the first radio frame comprises one of the following: an association response frame, a reassociation response frame, a channel probe response frame, a beacon frame, a response frame for a notification frame entering the long sleep; and the access point uses the first radio frame to carry capability information indicating whether the access point itself supports the capability of long sleep of the station.

Preferably, before the station receives the first sleeping time when the station enters a long sleep from the access point, the method further comprises: the station sends a second radio frame to the access point, wherein the second radio frame comprises one of the following: an association request frame, a reassociation request frame, a channel probe request frame, a notification frame sent to the access point by the station when entering the long sleep; the station uses the second radio frame to carry capability information for indicating whether the station itself has a capability of long sleep and information for indicating whether the access point needs to inform the station of the buffer condition thereof in a TIM.

Preferably, the long sleep refers to the case where the station is in a doze state of being able to choose to receive or not to receive buffer indication information sent by the access point.

According to another aspect of the present invention, a sleeping device is provided. The device may be applied to a station, comprising: a first determining module configured to determine a first sleeping time for the station to enter a long sleep; a notification module configured to notify an access point of the first sleeping time; and a sleeping module configured to enter the long sleep according to the first sleeping time.

According to another aspect of the present invention, a sleeping device is also provided. The device may be applied to a station, comprising: a receiving module configured to receive a first sleeping time from an access point, with the first sleeping time being used for indicating time when the station enters a long sleep; and a sleeping module configured to enter the long sleep according to the first sleeping time.

In the present invention, the station informs the first sleeping time to the access point, which enables the access point to acquire the first sleeping time of the station and cache data for the station, and at the same time, the access point may acquire the state of the station, which saves the cost for sending service indication information.

### Brief Description of the Drawings

Drawings, provided for further understanding of the present invention and forming a part of the specification, are used to explain the present invention together with embodiments of the present invention rather than to limit the present invention, wherein
Fig. 1 is a schematic diagram of a traditional power-saving mechanism using DTIM and TIM according to the related art;
Fig. 2 is the first flowchart of a sleeping method according to an embodiment of the present invention;
Fig.3 is the second flowchart of a sleeping method according to an embodiment of the present invention;
Fig.4 is a flowchart of message interaction when a station enters a long sleep according to the embodiments of the present invention;
Fig. 5 is the first structural block diagram of a sleeping device according to the embodiments of the present invention;
Fig. 6 is the first particular structural block diagram of a sleeping device according to the preferred embodiments of the present invention;
Fig. 7 is the second particular structural block diagram of a sleeping device according to the preferred embodiments of the present invention;
Fig. 8 is the third particular structural block diagram of a sleeping device according to the preferred embodiments of the present invention;
Fig. 9 is the fourth particular structural block diagram of a sleeping device according to the preferred embodiments of the present invention; and
Fig. 10 is the second structural block diagram of the sleeping device according to the embodiments of the present invention.

### Detailed Description of the Embodiments

Note that, the embodiments of the present invention and the features of the embodiments may be combined with each other if there is no conflict. The present invention will be explained below with reference to the drawings and in conjunction with the embodiments in detail.

A sleeping method is provided in an embodiment of the present invention, and Fig. 2 is a flowchart of a sleeping method according to an embodiment of the present invention. As shown in Fig. 2, step S202 to step S206 below are comprised.

Step S202, a station determines a first sleeping time for the station itself to enter a long sleep.

Step S204, the station notifies an access point of the first sleeping time.

Step S206, the station enters the long sleep according to the first sleeping time.

In relevant art, the AP is not able to acquire the duration that the station stays in a long sleep, thus data may be discarded because the buffer on the AP side is not enough. In the above-mentioned embodiment, the station informs the first sleeping time to the access point, which enables the access point to acquire the first sleeping time of the station and cache data for the station, and at the same time, the access point may acquire the state of the station, which saves the cost for sending service indication information.

The above-mentioned long sleep refers to a doze state in which the station cannot receive buffer indication information sent by an access point, cannot transceive a radio frame, and remain working at low power.

In step S204, the station informs the access point of the first sleeping time is realized by the following steps: the station sends a first radio frame to the access point, and the station informs, in the first radio frame, the access point that whether the station has a capability to enter the long sleep. If the station has the capability to enter the long sleep, the first radio frame carries the first sleeping time. The above-mentioned first radio frame comprises one of the following: an association request frame, a reassociation request frame, a channel probe request frame, and a notification frame sent to the access point by the station when entering the long sleep. In this preferred embodiment, the access point is informed by means of carrying the first sleeping time in the radio frame, and the notification method is simple and reliable. When informing the access point that the station has the capability to enter the long sleep, the station may indicate the access point that whether the access point needs to inform the buffer condition of the station in the TIM.

That is, before the station informs an access point of the first sleeping time, the station sends to the access point capability information about whether the station itself has a capability of long sleep. Preferably, the station may use the first radio frame to carry the capability information about whether the station itself has the capability of long sleep. It should be noted that capability negotiation may be performed using an association frame, and notification of the sleeping time may be performed using the association frame, and may also be carried out using the notification frame sent to the access point by the station when entering the long sleep after the association is finished. When the association frame is used, the frame carrying the sleeping time and the frame carrying the capability information may be the same radio frame or different radio frames.

In addition, the station may also determine the sleeping time of the long sleep by means of negotiating with the access point; particularly, before the station enters the long sleep according to the first sleeping time, the station receives a second radio frame from the access point, wherein the second radio frame carries a second sleeping time; the station determines the sleeping time of performing the long sleep according to the second sleeping time, i.e. if the first sleeping time is different from the second sleeping time, the second sleeping time is determined as the sleeping time of the long sleep. That is to say, it is subject to the second sleeping time sent by the access point.

The station receiving the second sleeping time from the access point is realized by the following steps: the station receives the second radio frame from the access point; the access point informs, in the second radio frame, the station whether the access point itself supports the long sleep of the station; and when supporting the long sleep of the station, the access point uses the second radio frame to carry the second sleeping time. The above-mentioned second radio frame comprises one of the following: an association response frame, a reassociation response frame, a channel probe response frame, a response frame for a notification frame sent to the access point by the station when entering the long sleep, and a beacon frame.

That is, before the station receives the second sleeping time from the access point, the access point sends to the station the capability information about whether the access point itself supports the capability of long sleep of the station. Preferably, the access point uses the second radio frame to carry the capability information about whether the station itself supports the capability of long sleep. It should be noted that capability negotiation may be performed using an association frame, and notification of the sleeping time may be performed using the association frame, and may also be carried using the response frame for the notification frame sent to the access point by the station when entering the long sleep after the association is finished. When the association frame is used, the frame carrying the sleeping time and the frame carrying the capability information may be the same radio frame or different radio frames.

Preferably, the above-mentioned first sleeping time or second sleeping time (i.e. the sleeping time determined by negotiating with the access point) is a duration calculated starting from the moment when the station enters the doze state; and in the duration of the long sleep, the station enters awake state and sends a radio frame (i.e., a third radio frame for requesting buffer data described below) to the access point at least once; after receiving the radio frame, the access point immediately sends the buffer data to the station, or immediately replies an acknowledgement frame which carries indication information about whether there is buffer data of the station. If there is buffer data of the station, the AP sends the buffer data to the station when obtaining a channel access chance subsequently. When the station finishes receiving the buffer data and switches to the doze state from the awake state, the first sleeping time or the second sleeping time is re-calculated starting from the switching moment. The first sleeping time or the second sleeping time is in units of integer times of the beacon frame interval.

If the station does not enter the awake state during the first sleeping time or the second sleeping time, the access point does not buffer data for the station any more after the first sleeping time or the second sleeping time.

When the station enters the long sleep according to the first sleeping time or the second seeping time, the access point should also be notified, so that the access point acquires a state which the station is in. The particular steps are as follows: the station sends a notification frame to the access point, wherein the notification frame is used for notifying the access point that the station will enter the long sleep according to the first sleeping time or the second sleeping time. After sending the notification frame, the station enters the long sleep according to the first sleeping time or the second sleeping time; or, After sending the notification frame, the station receives the response frame for the notification frame from the access point, wherein the response frame is used for indicating whether the access point agrees that the station enters the long sleep, and if the number of stations associated with the access point in the doze state is within the allowance of the access point, the access point agrees that the station enters the long sleep and the station enters the long sleep according to the first sleeping time or the second sleeping time. The above-mentioned notification frame comprises one of the following: a direct multicast service (DMS) request frame, a flexible multicast service request frame, a data frame, a management frame and a control frame, and the response frame comprises one of the following: a direct multicast service response frame, a flexible multicast service response frame, a data frame, a management frame and a control frame. It should be noted that the access point may refuse the station to enter the long sleep by controlling the number of stations in the long sleep.

Preferably, the notification frame sent to the access point by the station may also carry a multicast broadcast service which the station desires to receive, and the access point buffers for the station the multicast broadcast service data which the station desires to receive when the station is in the doze state.

Preferably, after the station sends to the access point the notification frame, when the station does not indicate whether the access point needs to notify, in the TIM, the buffer condition of the station, the access point does not notify the buffer condition of the station in the TIM; and when the station indicates whether the access point needs to notify the buffer condition of the station in the TIM, the access point notifies or does not notify the buffer condition of the station according to the requirement of the station. The access point does not notify, in the TIM, the buffer condition of the station which has entered the long sleep, which saves the signalling cost.

Preferably, after the station sends the notification frame to the access point, the access point sends to the station the response frame for the notification frame carrying the indication information, wherein the indication information is used for indicating whether the access point notifies the buffer condition of the station in the TIM; when the indication information indicates notifying the buffer condition of the station in the TIM, the access point carries the buffer condition of the station in the TIM; and when the indication information indicates not notifying the buffer condition of the station in the TIM, the access point does not carry the buffer condition of the station in the TIM.

Preferably, after the station enters the long sleep according to the first sleeping time or the second sleeping time, the station buffers unicast data for the station according to at least one of the following parameters: the sleeping time of the station, the priority of the data, discard strategy of the data and the size of the buffer area of the access point.

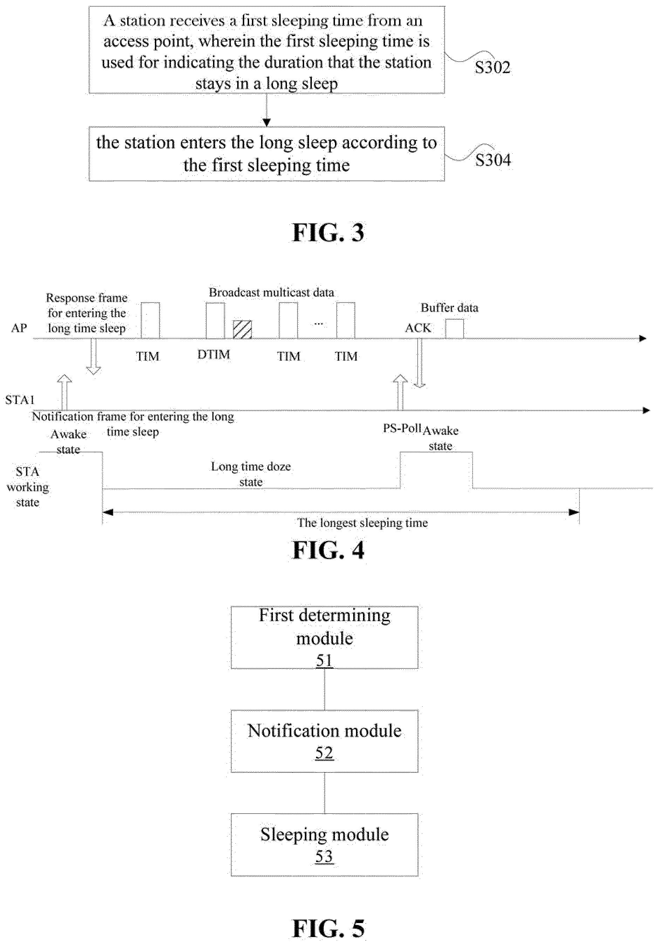

The embodiment of the present invention also provides another sleeping method, i.e., the access point informing the station of sleeping time, as shown in Fig. 3. The method comprises step S302 to step S304 below.

Step S302, a station receives a first sleeping time from an access point, wherein the first sleeping time is used for indicating the duration that the station stays in a long sleep.

Step S304, the station enters the long sleep according to the first sleeping time.

Preferably, before the station receives from the access point the first sleeping time for the station to enter the long sleep, the above-mentioned method further comprises: the access point sends to the station a first radio frame carrying the first sleeping time, wherein the first radio frame comprises one of the following: an association response frame, a reassociation response frame, a channel probe response frame, a beacon frame, a response frame for a notification frame entering the long sleep.

Preferably, the access point uses the first radio frame to inform the station whether the access point supports the station to enter the long sleep.

Preferably, before the station receives from the AP the first sleeping time for the station to enter the long sleep, the above-mentioned method further comprises: the station sends a second radio frame to the access point.

Preferably, that the station sending the second radio frame to the access point comprises: the station notifies, in the second radio frame, the access point whether the station has the capability of long sleep.

Preferably, the station indicates whether the access point needs to inform, in the TIM, the buffer condition of the station when the station informs the access point that the station has the capability of long sleep.

Preferably, the second radio frame comprises one of the following: an association request frame, a reassociation request frame, a channel probe request frame, and a notification frame sent to the access point by the station when entering the long sleep.

Preferably, the long sleep refers to the case where the station is in a doze state of not receiving buffer indication information sent by the access point.

Preferably, during the first sleeping time, the station enters the awake state and sends a third radio frame to the access point at least once, wherein the third radio frame is used for requesting buffer data; the access point replies an acknowledgement frame to the station according to the third radio frame, and carries in the acknowledgement frame indication information for indicating whether there is buffer data; if there is the buffer data, the access point sends the buffer data to the station when obtaining a channel access chance; and the station returns to the long sleep from the awake state after having completed receiving the buffered data, and the first sleeping time restarts from the return moment.

Preferably, if the station does not enter the awake state during the first sleeping time, after the first sleeping time the access point does not buffer data for the station any more.

When entering the long sleep according to the first sleeping time, the station needs to inform the access point that the station has entered the long sleep, so that the access point acquires the state which the station is in. The particular steps are as follows: the station sends a notification frame to the access point, wherein the notification frame is used for notifying the access point that the station will enter the long sleep according to the first sleeping time. After sending the notification frame, the station enters the long sleep according to the first sleeping time. or, the station sends the notification frame and then receives the response frame for the notification frame from the access point, wherein the response frame is used for indicating whether the access point allow the station to enter the long sleep, and in the case where the number of the stations associated with the access point in the long sleep is within the allowance of the access point, the access point allows the station to enter the long sleep, and the station enters the long sleep according to the first sleeping time. The above-mentioned notification frame comprises one of the following: a direct multicast service request frame, a flexible multicast service request frame, a data frame, a management frame and a control frame, and the response frame comprises one of the following: a direct multicast service response frame, a flexible multi-cast service response frame, a data frame, a management frame and a control frame. It should be noted that the access point may refuse the station to enter the long sleep by controlling the number of stations in the long sleep.

Preferably, the notification frame sent to the access point by the station may also carry a multicast broadcast service which the station desires to receive, and the access point buffers for the station the multicast broadcast service data which the station desires to receive when the station is in the doze state.

Preferably, after the station sends to the access point the notification frame, when the station does not indicate whether the access point needs to notify, in the TIM, the buffer condition of the station, the access point does not notify the buffer condition of the station in the TIM; and when the station indicates whether the access point needs to notify the buffer condition of the station in the TIM, the access point notifies or does not notify the buffer condition of the station according to the requirement of the station. The access point does not notify, in the TIM, the buffer condition of the station which has entered the long sleep, which saves the signalling cost.

Preferably, after the station sends the notification frame to the access point, the access point sends to the station the response frame for the notification frame carrying the indication information, wherein the indication information is used for indicating whether the access point notifies the buffer condition of the station in the TIM; when the indication information indicates notifying the buffer condition of the station in the TIM, the access point carries the buffer condition of the station in the TIM; and when the indication information indicates not notifying the buffer condition of the station in the TIM, the access point does not carry the buffer condition of the station in the TIM.

Preferably, the first sleeping time is calculated starting from the moment when the station enters the long sleep, and is in units of integer times of the beacon frame interval.

Fig.4 is a flowchart of message interaction when a station enters a long sleep according to an embodiment of the present invention; as shown in Fig. 4, before entering the long sleep, an STA1 sends a notification frame to an AP and receives a response of the AP, and the STA1 enters a doze state in the case where the AP allows the station to enter the long sleep. During the sleeping time, the STA1 enters the awake state for at least once, and sends PS-Poll to the AP to request data buffered by the AP. Of course, the STA1 may also directly enter the long sleep after sending the notification frame to the AP, i.e., directly entering the long sleep after notifying the AP without needing to receive the response of the AP.

The implementation process of the embodiments of the present invention is described in details with reference to the embodiments below.
the explanation of the longest sleeping time in the following embodiments are as follows: when the means that the station notifies the access point is adopted, the longest sleeping time corresponds to the above-mentioned first sleeping time; and when the means that the station negotiates with the access point, the longest sleeping time corresponds to the above-mentioned sleeping time remaining in the sleep. The long sleep in the following preferred embodiments refers to the case where the station is in a doze state of being able to choose to receive or not to receive buffer indication information sent by the access point.

### Preferred embodiment 1

In this preferred embodiment, the station notifies the access point of the longest sleeping time during channel probe or negotiates with the access point about the longest sleeping time during channel probe; and the station uses a data frame, management frame or control frame, in which at least one relevant bit is set, as a notification frame, or sends a notification frame to indicate the access point that the station has entered the long sleep when the station enters a long sleep.

The station sends a probe request frame to the access point when performing channel probe, and informs, in this frame, the access point whether the station has a capability of long sleep; and the particular method is setting a long sleep capability domain; it indicates that the station supports the long sleep when the value of the domain is 1, and does not support same when the value is 0, vice versa. When the station supports the long sleep, optionally, the station may indicate whether the station needs the access point to notify, in the TIM, the buffer condition of the station. When the station supports the long sleep, the method for notifying the access point of the longest sleeping time of the station during channel probe is: the longest sleeping time for the station to enter the long sleeping is carried in the probe request frame, and the longest sleeping time is integer times of the beacon frame interval.

The method for negotiating the longest sleeping time with the access point in the process of channel probe is: when performing channel probe, the station sends a probe request frame to the access point, wherein the probe request frame carries a capability domain indicating whether the station supports the long sleep; and when the long sleep is supported by the station, the longest sleeping time desired when entering the long sleeping and an indication about whether the station needs the access point to notify the buffer condition of the station in the TIM are also carried. After receiving the probe request frame sent to the access point by the station, the access point replies a probe response frame to the station, and informs the station whether the access point supports the long sleep; when the access point supports the station to enter the long sleep, the longest sleeping time determined for the station is also carried in the frame, then after receiving the probe response frame successively and associating with this access point successively, the station takes the longest sleeping time as the longest sleeping time for the station staying in the long sleep.

The station needs to send a notification frame to the access point to notify the access point that the station has entered the long sleep. In this preferred embodiment, the existing data frame, management frame or control frame may be taken as the notification frame, and the particular method is: setting a domain indicating whether the station has entered the long sleep in a physical layer signalling or Media Access Control (MAC for short) layer signalling, wherein the domain is carried in the physical layer signalling or MAC layer signalling of the data frame, management frame or control frame sent to the access point by the station; when the domain is set to 1, it indicates that the station has entered the long sleep, and when the domain is set to 0, it indicates that the station has not entered the long sleep, vice versa. Or, when entering the long sleep, the station sends a notification frame to indicate that the station has entered the long sleep; and the station immediately enters the long sleep according to the first sleeping time after sending the notification frame, or the access point sends, after receiving the frame, a corresponding response frame carrying a state code: allowing or refusing.

After receiving the response frame, if the station determines that the access point has agreed the request of the station, and then the station enters the long sleep. The access point, according to the condition of the access point for example the current buffer condition, may refuse the station to enter the long sleep by controlling the number of stations in the long sleep.

Once entering the doze state, the station needs to wake up at least once during the longest sleeping time and to send a radio frame to the access point (for example, sending a PS-Poll frame); after receiving the radio frame, the access point immediately sends buffer data to the station, or immediately replies an acknowledgement frame, wherein indication information about whether there is buffer data of the station is carried in the acknowledge frame; and if there is buffer data, the buffer data will be sent to the station when a channel access chance is obtained by the AP subsequently.

The longest sleeping time is calculated starting from the moment when the station enters the long sleep; for example, a timer or a counter set on the access point side start running from the moment that the station enters the long sleep ; the timer or counter clears if the station wakes up from the doze state before the longest sleeping time expires; and when finishing receiving the buffer data, the station goes back to the doze state from the awake state, and the access point recounts starting from this moment.

In the case where the access point acquires that the station has entered the long sleep, when the station does not indicate whether the station needs the access point to notify the buffer condition of the station in the TIM, the access point does not notify the buffer condition of the station in the TIM in default; and when the station indicates whether the station needs the access point to notify the buffer condition of the station in the TIM, the access point notifies or does not notify the buffer condition of the station according to the requirement of the station. The access point indicates whether to indicate, in the TIM, buffer condition for the station in the long sleep, in the response frame for the notification frame sent to the station; if yes, the access point will still carry, in the TIM, buffer condition for the station in the long sleep; and if no, the buffer condition will not be carried, in the TIM, for the station in the long sleep.

The access point may buffer unicast data for the station after the station enters the long sleep according to one or more of the following parameters: the longest sleeping time of the station, the priority of the data, the discard strategy of the data, the size of a cache area of the access point.

When entering the long sleep, the station may notify, in the above-mentioned notification frame, the access point of the multicast broadcast service which the station desires to receive, then the access point buffers the multicast broadcast service data, which the station desires, for the station according to the longest sleeping time when the station is in the long sleep; and after waking up from the long sleep, and the station sends a radio frame to request the access point to send the buffered multicast broadcast service data.

If the station does not enter the awake state during the longest sleeping time, the access point may no more buffer data for the station when the longest sleeping time expired.

### Preferred embodiment 2

In this preferred embodiment, the station informs the access point of the longest sleeping time in the process of channel probe, or negotiates with the access point about the longest sleeping time in the process of channel probe; and the station indicates the access point that the station has already entered the long sleep by taking an existing direct multicast service request frame or a flexible multicast service request frame as a notification frame.

The method for notifying the access point in the process of channel probe and the method for negotiating with the access point in the process of channel probe are the same with that in embodiment 1, which will not be described any more.

The station needs to send a notification frame to the access point to notify the access point that the station has entered the long sleep. In this preferred embodiment, the existing Direct Multicast Service request frame or a Flexible Multicast Service Request frame is taking as the notification frame; and the particular method is: a domain that indicates whether the station has entered a long sleep is added, wherein the domain is set in a physical layer signalling or MAC layer signalling of the above-mentioned frame; when the domain is set to 1, it indicates that the station has entered the long sleep, and when the domain is set to 0, it indicates that the station has not entered the long sleep, vice versa. The access point sends, after receiving the frame, a corresponding response frame carrying a state code: allowing or refusing. After receiving the response frame, the station determines that the access point has accepted the request of the station, and then enters the long sleep. The access point, according to the condition of itself for example the current buffer condition, may refuse the station to enter the long sleep by controlling the number of the stations in the long sleep.

Once entering the doze state, during the longest sleeping time, the station needs to wake up at least once and to send a radio frame to the access point (for example, sending a PS-Poll frame); after receiving the radio frame, the access point immediately sends buffer data to the station, or immediately replies an acknowledgement frame, wherein indication information about whether there is buffer data of the station is carried in the acknowledge frame; and if there is the buffer data, the buffer data will be sent to the station when a channel access chance is obtained subsequently.

The longest sleeping time is calculated starting from the moment when the station enters the long sleep; for example, a timer or a counter set on the access point side start running from the moment that the station enters the long sleep; the timer or counter clears if the station wakes up from the long sleep before the longest sleeping time expires; and when finishing receiving the buffer, the station goes back to the doze state from the awake state, and the access point recounts starting from this moment.

In the case where the access point acquires that the station has entered the long sleep, when the station does not indicate whether the station needs the access point to notify the buffer condition of the station in the TIM, the access point does not notify the buffer condition of the station in the TIM in default; and when the station indicates whether the station needs the access point to notify the buffer condition of the station in the TIM, the access point notifies or does not notify the buffer condition of the station according to the requirement of the station. The access point indicates, in the response frame for the notification frame sent to the station, whether to indicate, in the TIM, buffer condition for the station in the long sleep; If yes, the access point will still carry, in the TIM, buffer condition of the station in the long sleep; and if no, the buffer condition of the station will not be indicated, in the TIM, for the station in the long sleep.

The access point may buffer unicast data for the station after the station enters the long sleep according to one or more of the following parameters: the longest sleeping time of the station, the priority of the data, the discard strategy of the data, the size of a cache area of the access point.

When entering the long sleep, the station may notify, in the above-mentioned frame, the access point of the multicast broadcast service which the station desires to receive. The access point buffers the multicast broadcast data, which the station desires, for the station according to the longest sleeping time when the station is in the long sleep; and the station wakes up from the long sleep and sends a radio frame to request access point to send the buffered multicast broadcast service data.

If the station does not enter the awake state during the longest sleeping time, the access point may no more buffer data for the station when the longest sleeping time expires.

### Preferred embodiment 3

In this preferred embodiment, the station notifies the access point of the longest sleeping time in the process of association or reassociation or negotiates with the access point about the longest sleeping time in the process of association or reassociation; the station takes a data frame, management frame or control frame, in which at least one bit is set, as a notification frame, or sends a notification frame for entering a long sleep to indicate that the station has already entered the long sleep.

The station sends a (Re) Association request frame to the access point when performing the (re)associating, and informs, in the (Re) Association request frame, the access point whether the station has a capability of long sleep; and the particular method is setting a long sleep capability domain; it indicates that the station supports the long sleep when the value of the domain is 1, and does not support same when the value is 0, vice versa. When the station supports the long sleep, optionally, the station further indicates whether the station needs the access point to notify the buffer condition of the station in the TIM. When the station supports the long sleep, the method that, the station notifies the access point of the longest sleeping time in the process of association or reassociation is: when (re)associating, the station sends a (Re)association request frame to the access point, wherein the (Re)association request frame carries the longest sleeping time when the station enters the long sleep.

The method for negotiating the longest sleeping time with the access point during association or reassociation is: when (re)associating, the station sends a (Re)Association request frame to the access point, wherein the (Re)Association request frame carries a capability domain that whether the station supports the long sleep. The longest sleeping time, which is desired by the station for entering the long sleep, and an indication, in the TIM, about whether the station needs the access point to notify the buffer condition of the station are also carried. After receiving the (Re)Association request frame sent to the access point itself by the station, the access point replies a (Re)Association response frame to the station, and notifies the station whether the access point supports the long sleep; when the access point supports that the station enters the long sleep, the longest sleeping time determined for the station is also carried in the frame. After receiving the (Re) Association response frame successively and associating with this access point successively, the station uses the longest sleeping time, which is determined by the access point, as the longest sleeping time for the station to enter the long sleep.

The station needs to send a notification frame to the access point to notify that the station has entered the long sleep. In this preferred embodiment, an existing data frame, management frame or control frame may be taken as a notification frame, and the particular method is: a domain is set in a physical layer signalling or MAC layer signalling of the data frame, management frame or control frame sent to the access point by the station; when the domain is set to 1, it indicates that the station has entered a long sleep, and when the domain is set to 0, it indicates that the station has not entered a long sleep, vice versa. Or, when entering the long sleep, the station sends a notification frame to indicate that the station has entered a long sleep; and the station immediately enters the long sleep according to the longest sleeping time after sending the notification frame, or the access point sends, after receiving the notification frame, a corresponding response frame carrying a state code: allowing or refusing. After receiving the response frame, the station determined that the access point has accepted the request of itself, and then enters the long sleep.

Once entering the doze state, in this longest sleeping time, the station needs to wake up at least once and to send a radio frame (for example, a PS-Poll frame) to the access point; after receiving the radio frame, the access point immediately sends buffer data to the station, or immediately replies an acknowledgement frame carrying indication information about whether there is buffer data of the station; and if there is the buffer data, the buffer data will be sent to the station when a channel access chance is obtained subsequently.

In the case where the access point acquires that the station has entered the long sleep, when the station does not indicate whether the station needs the access point to notify the buffer condition of the station in the TIM, the access point does not notify the buffer condition of the station in the TIM in default; and when the station indicates whether the station needs the access point to notify the buffer condition of the station in the TIM, the access point notifies or does not notify the buffer condition of the station according to the requirement of the station. The access point indicates, in the response frame for the notification frame sent to the station, whether to indicate, in the TIM, buffer condition for the station in the long sleep. If yes, the access point will still carry, in the TIM, buffer condition of the station in the long sleep; and if no, the buffer condition of the station will not be indicated, in the TIM, for the station in the long sleep.

The access point may buffer unicast data for the station after the station enters the long sleep according to one or more of the following parameters: the longest sleeping time of the station, the priority of the data, the discard strategy of the data, the size of a cache area of the access point.

When entering the long sleep, the station may notify, in the above-mentioned notification frame, the access point of the multicast broadcast service which the station desires to receive. The access point buffers the multicast broadcast data, which the station desires, for the station according to the longest sleeping time when the station is in the long sleep. After waking up from the long sleep, and the station sends a radio frame to request the access point to send the buffered multicast broadcast service data.

If the station does not enter the awake state during the longest sleeping time, the access point may no more buffer data for the station when the longest sleeping time expires.

### Preferred embodiment 4

In this preferred embodiment, the station notifies the access point of the longest sleeping time in the process of association or reassociation or negotiates with the access point about the longest sleeping time in the process of association or reassociation; and the station indicates that the station has entered the long sleep by multiplexing an existing direct multicast service request frame or a flexible multicast service request frame as a notification frame.

The method for notifying the access point in the process of association or reassociation and the method for negotiating with the access point in the process of association or reassociation are the same with that in embodiment 3, which will not be described any more.

The station needs to send the notification frame to the access point to notify that the station has entered the long sleep. In this preferred embodiment, the existing Direct Multicast Service request frame or FMS Request frame is multiplexed as the notification frame; and the particular method is: a domain is added in a physical layer signalling or MAC layer signalling of the above-mentioned frame; when the domain is set to 1, it indicates that the station has entered a long sleep, and when the domain is set to 0, it indicates that the station has not entered a long sleep, vice versa. The access point sends, after receiving the frame, a corresponding response frame carrying a state code: allowing or refusing. When receiving the response frame, the station determines that the access point has accepted the request of itself, and then enters the long sleep.

Once entering the doze state, during the longest sleeping time, the station needs to wake up at least once and to send a radio frame (for example, sending a PS-Poll frame) to the access point; after receiving the radio frame, the access point immediately sends buffer data to the station, or immediately replies an acknowledgement frame carrying indication information about whether there is buffer data of the station; and if there is the buffer data, the buffer data will be sent to the station when a channel access chance is obtained subsequently.

In the case where the access point acquires that the station has entered the long sleep, when the station does not indicate whether the station needs the access point to notify the buffer condition of the station in the TIM, the access point does not notify the buffer condition of the station in the TIM in default; and when the station indicates whether the station needs the access point to notify the buffer condition of the station in the TIM, the access point notifies or does not notify the buffer condition of the station according to the requirement of the station. The access point indicates, in the response frame for the notification frame sent to the station, whether to indicate, in the TIM, buffer condition for the station in the long sleep; if yes, the access point will still carry, in the TIM, buffer condition of the station in the long sleep; and if no, the buffer condition will not be indicated, in the TIM, for the station in the long sleep.

The access point may buffer unicast data for the station after the station enters the long sleep according to one or more of the following parameters: the longest sleeping time of the station, the priority of the data, the discard strategy of the data, the size of a cache area of the access point.

When entering the long sleep, the station may notify, in the above-mentioned notification frame, the access point of the multicast broadcast service which the station desires to receive. The access point buffers the multicast broadcast service data, which the station desires, for the station according to the longest sleeping time when the station is in the long sleep; and the station wakes up from the long sleep and sends a radio frame to request the access point to send the buffered multicast broadcast service data.

If the station does not enter the awake state during the longest sleeping time, the access point may no more buffer data for the station when the longest sleeping time expires.

### Preferred embodiment 5

In this preferred embodiment, the station notifies the access point of, or negotiates with the access point about the longest sleeping time in the process entering a doze state; the station takes a data frame, management frame or control frame, in which at least one bit is set, as a notification frame, or sends a notification for entering the long sleep to indicate that the station has entered the long sleep.

The station informs the access point whether the station has the capability of long sleep in the process of channel probe or association. When the station supports the long sleep, optionally, the station may further indicate whether the station needs the access point to notify the buffer condition of the station in the TIM. The method that when supporting the long sleep, the station notifies the access point of the longest sleeping time in the process of entering the long sleep is: when entering the long sleep, the station carries, in the notification frame sent to the access point, the longest sleeping time for the station to enter the long sleep.

The access point notifies the station about whether the access point supports that the station enters the long sleep in the channel probe process, association process or beacon frame. The method for negotiating with the access point in the process of entering the long sleep when the access point supports the long sleep is: when entering the long sleep, the station sends the notification frame to the access point, wherein the notification frame carries the longest sleeping time which the station desires when entering the long sleep. After receiving the notification frame sent to the access point by the station, the access point replies a response frame to the station, wherein the response frame carries the longest sleeping time determined for the station; the station successively receives the response frame, and then uses the longest sleeping time determined by the access point as the longest sleeping time when the station enters the long sleep.

The station needs to send the notification frame to the access point to notify that the station has entered the long sleep. In this preferred embodiment, an existing data frame, management frame or control frame is multiplexed as a notification frame, and the particular method is: a domain is set in a physical layer signalling or MAC layer signalling of the data frame, management frame or control frame sent to the access point by the station; when the domain is set to 1, it indicates that the station has entered a long sleep, and when the domain is set to 0, it indicates that the station has not entered a long sleep, vice versa. When this domain in the data frame, management frame or control frame is set to 1, the above-mentioned longest sleeping time is carried at the same time. Or, when entering a long sleep, the station sends a notification frame to indicate that the station has entered a long sleep, wherein the notification frame carries the longest sleeping time; and the station immediately enters the long sleep according to the longest sleeping time after sending the notification frame, or the access point sends, after receiving the above-mentioned frame, a corresponding response frame carrying a state code: allowing or refusing. After receiving the response frame, the station detects that the access point has accepted the request of itself, and then enters the long sleep.

Once entering the doze state, during the longest sleeping time, the station needs to wake up at least once and to send a radio frame to the access point (for example, sending a PS-Poll frame); after receiving the radio frame, the access point immediately sends buffer data to the station, or immediately replies an acknowledgement frame, wherein indication information about whether there is buffer data of the station is carried in the acknowledge frame; and if there is the buffer data, the buffer data will be sent to the station when a channel access chance is obtained subsequently.

In the case where the station has entered the long sleep, when the station does not indicate whether the station needs the access point to notify the buffer condition of the station in the TIM, the access point does not notify the buffer condition of the station in the TIM in default; and when the station indicates whether the station needs the access point to notify the buffer condition of the station in the TIM, the access point notifies or does not notify the buffer condition of the station according to the requirement of the station. The access point indicates, in the response frame for the notification frame sent to the station, whether to indicate, in the TIM, buffer condition for the station in the long sleep; If yes, the access point will still carry, in the TIM, buffer condition of the station in the long sleep; and if no, the buffer condition of the station will not be indicated, in the TIM, for the station in the long sleep.

The access point may buffer unicast data for the station after the station enters the long sleep according to one or more of the following parameters: the longest sleeping time of the station, the priority of the data, the discard strategy of the data, the size of a cache area of the access point.

When entering the long sleep, the station may notify, in the above-mentioned notification frame, the access point of the multicast broadcast service which the station desires to receive. The access point buffers the multicast broadcast service data, which the station desires, for the station according to the longest sleeping time when the station is in the long sleep; and the station wakes up from the long sleep and sends a radio frame to request the access point to send the buffered multicast broadcast service data.

If the station does not enter the awake state during the longest sleeping time, the access point may no more buffer data for the station when the longest sleeping time expires.

### Preferred embodiment 6

In this preferred embodiment, a station notifies an access point of or negotiates with the access point about the longest sleeping time in the process of entering the doze state; and the station indicates that the station has entered the long sleep by multiplexing an existing direct multicast service request frame or flexible multicast service request frame as a notification frame.

The method for notifying the access point in the process of entering the long sleep and the method for negotiating with the access point in the process of entering the long sleep are the same with that in embodiment 5, which will not be described any more.

The station needs to send a notification frame to the access point to notify that the station has entered the long sleep. In this preferred embodiment, an existing Direct Multicast Service request frame or an FMS Request frame is multiplexed as the notification frame; and the particular method is: a domain is added in a physical layer signalling or MAC layer signalling of the above-mentioned frame; when the domain is set to 1, it indicates that the station has entered the long sleep, and when the domain is set to 0, it indicates that the station has not entered the long sleep, vice versa. When this domain in the above-mentioned frame is set to 1, the above-mentioned longest sleeping time is carried at the same time. The access point sends, after receiving the frame, a corresponding response frame carrying a state code: allowing or refusing. After receiving the response frame, the station detects that the access point has accepted the request of itself, and then enters the long sleep.

Once entering the doze state, during this longest sleeping time, the station needs to wake up at least once and to send a radio frame to the access point (for example, sending a PS-Poll frame); after receiving the radio frame, the access point immediately sends buffer data to the station, or immediately replies an acknowledgement frame, wherein indication information about whether there is buffer data of the station is carried in the acknowledge frame; and if there is buffer data, the buffer data will be sent to the station when a channel access chance is obtained subsequently.

In the case where the access point acquires that the station has entered the long sleep, when the station does not indicate whether the station needs the access point to notify the buffer condition of the station in the TIM, the access point does not notify the buffer condition of the station in the TIM in default; and when the station indicates whether the station needs the access point to notify the buffer condition of the station in the TIM, the access point notifies or does not notify the buffer condition of the station according to the requirement of the station. The access point indicates, in the response frame for the notification frame sent to the station, whether to indicate, in the TIM, buffer condition for the station in the long sleep; If yes, the access point will still carry, in the TIM, buffer condition of the station in the long sleep; and if no, the buffer condition of the station will not be indicated, in the TIM, for the station in the long sleep.

The access point may buffer unicast data for the station after the station enters the long sleep according to one or more of the following parameters: the longest sleeping time of the station, the priority of the data, the discard strategy of the data, the size of a cache area of the access point.

When entering the long sleep, the station may notify, in the above-mentioned notification frame, the access point of the multicast broadcast service which the station desires to receive, then the access point buffers the multicast broadcast service data, which the station desires, for the station according to the longest sleeping time when the station is in the long sleep; and the station wakes up from the long sleep and sends a radio frame to request the access point to send the buffered multicast broadcast service data.

If the station does not enter the awake state during the longest sleeping time, the access point may no more buffer data for the station when the longest sleeping time expires.

### Preferred embodiment 7

In this preferred embodiment, the station informs the access point whether the station itself has the capability of long sleep in the process of channel probe or association. When the station supports the long sleep, optionally, the station further indicates, in the above-mentioned frames, whether the station needs the access point to notify the buffer condition of the station in the TIM.

The access point informs the station that whether the access point supports the long sleep in an association response frame, reassociation response frame, beacon frame, probe response frame, or a response frame for a notification frame for notifying that the station enters the long sleep; and when the access point supports the long sleep, the access point notifies the longest sleeping time of the station in the above-mentioned frame. The longest sleeping time is integer times of the beacon frame interval.

The station sends the notification frame to the access point to notify the access point that the station has entered the long sleep.

An existing data frame, a management frame or a control frame is multiplexed as a notification frame, and the particular method is: a domain, which is used for indicating whether the station has entered a long sleep, is added in a physical layer signalling or Media Access Control (MAC for short) layer signalling of the data frame, management frame or control frame sent to the access point by the station; when the domain is set to 1, it represents that the station has entered the long sleep, and when the domain is set to 0, it represents that the station has not entered a long sleep, vice versa. Or, the station, when entering a long sleep, sends a notification frame to indicate that the station has entered the long sleep; and the access point sends, after receiving the frame, a corresponding response frame carrying a state code: allowing or refusing, with the longest sleeping time being carried at the same time. After receiving the response frame, the station determines that the access point has accepted the request of itself, and then enters the long sleep according to the longest sleeping time. The access point may refuse the station to enter the long sleep by controlling the number of stations in the long sleep according to the buffer condition of the access point itself.

Or, an existing DMS request frame or FMS Request frame is multiplexed as the notification frame; and the particular method is: a domain that indicates whether the station has entered a long sleep is added in a physical layer signalling or MAC layer signalling of the above-mentioned frame; when the domain is set to 1, it represents that the station has entered the long sleep, and when the domain is set to 0, it represents that the station has not entered the long sleep, vice versa. The access point sends, after receiving the frame, a corresponding response frame carrying a state code: allowing or refusing. After receiving the response frame, the station determines that the access point has accepted the request of itself, and then enters the long sleep.

Once entering the doze state, the station needs to wake up at least once in this longest sleeping time and to send a radio frame to the access point (for example, sending a PS-Poll frame); after receiving the radio frame, the access point immediately sends buffer data to the station, or immediately replies an acknowledgement frame, wherein indication information about whether there is buffer data of the station is carried in the acknowledge frame; and if there is the buffer data, the buffer data will be sent to the station when a channel access chance is obtained subsequently.

The longest sleeping time is calculated starting from the moment when the station enters the long sleep; for example, a timer or a counter set on the access point side starts running from this moment; the timer or counter clears if the station wakes up from the doze state before the longest sleeping time expires; and when finishing receiving the buffer, the station goes back to the doze state from the awake state, and the access point recounts starting from this moment.

In the case where the access point acquires that the station has entered the long sleep, when the station does not indicate whether the station needs the access point to notify the buffer condition of the station in the TIM, the access point does not notify the buffer condition of the station in the TIM in default; and when the station indicates whether the station needs the access point to notify the buffer condition of the station in the TIM, the access point notifies or does not notify the buffer condition of the station according to the requirement of the station. The access point indicates, in the response frame for the notification frame sent to the station, whether to indicate, in the TIM, buffer condition for the station in the long sleep; If yes, the access point will still carry, in the TIM, buffer condition of the station in the long sleep; and if no, the buffer condition of the station will not be indicated, in the TIM, for the station in the long sleep.

The access point may buffer unicast data for the station after the station enters the long sleep according to one or more of the following parameters: the longest sleeping time of the station, the priority of the data, the discard strategy of the data, the size of a cache area of the access point.

When entering the long sleep, the station may notify, in the above-mentioned notification frame, the access point of the multicast broadcast service which the station desires to receive, then the access point buffers the multicast broadcast service data, which the station desires, for the station according to the longest sleeping time when the station is in the long sleep; and the station wakes up from the long sleep and sends a radio frame to request the access point to send the buffered multicast broadcast service data.

If the station does not enter the awake state during the longest sleeping time, the access point may no more buffer data for the station when the longest sleeping time expires.

It should be noted that, the steps as illustrated in the flowcharts of the accompanying drawings may be implemented by a computer system of a group of computer executable commands for example.

In addition, although logical sequences have been illustrated in the flowcharts, the steps as shown or as described may be implemented according to sequences different from those as described herein in some cases.

An embodiment of the present invention provides a sleeping device, applied to a station, and the sleeping device may be used to realize the above-mentioned sleeping method as shown in Fig. 2. Fig. 5 is the first structural block diagram of a sleeping device according an embodiment of the present invention. As shown in Fig. 5, the device comprises a determining module **51** and a notification module **52**, and a sleeping module **53**. The structure thereof is described in details below.

The first determining module **51** is configured to determine a first sleeping time for a station to enter a long sleep; the notification module **52** connected to the first determining module **51**, is configured to notify the access point of the first sleeping time determined by the first determining module **51**; and the sleeping module **53** connected to the notification module **52** is configured to enter the long sleep according to the first sleeping time which is determined by the first determining module **51** and is notified to the access point by the notification module **52**.

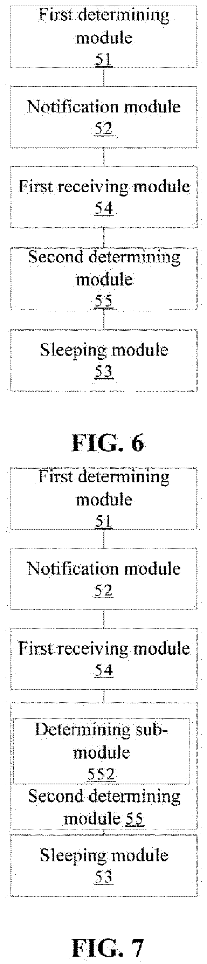

Fig. 6 is the first particular structural block diagram of a sleeping device according to a preferred embodiment of the present invention; as shown in Fig. 6, the above-mentioned sleeping device also comprises: a first receiving module **54**, connected to the notification module **52**, configured to receive a second radio frame from the access point after the notification module **52** notifies the access point of the first sleeping time, wherein the second radio frame carries a second sleeping time; and a second determining module **55**, connected to the first receiving module **54**, configured to determine the sleeping time for the long sleep according to the second sleeping time received by the first receiving module **54**.

Fig. 7 is the second particular structural block diagram of a sleeping device according to a preferred embodiment of the present invention; as shown in Fig. 7, the second determining module **55** comprises: a determining sub-module **552** configured to determine the second sleeping time to be the sleeping time for entering the long sleep in the case where the first sleeping time is different from the second sleeping time.

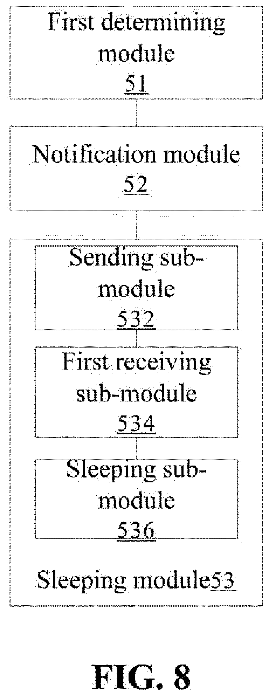

Fig. 8 is the third particular structural block diagram of a sleeping device according to a preferred embodiment of the present invention; as shown in Fig. 8, the sleeping module **53** comprises a sending sub-module **532**, a first receiving sub-module **534** and a sleeping sub-module **536**.

The sending sub-module **532** is configured to send notification frame to the access point, wherein the notification frame is used for notifying the access point to enter the long sleep according to the first sleeping time or second sleeping time; the first receiving sub-module **534** connected to the sending sub-module **532** is configured to receive the notification frame from the access point after the sending sub-module **532** sends the notification frame, wherein the response frame is used for indicating whether the access point allows the station to enter the long sleep; the sleeping sub-module **536** connected to the first sending sub-module **534** is configured to enter the long sleep according to the first sleeping time or the second sleeping time in the case where the response frame received by the first receiving sub-module **534** indicates that the access point allows the station to enter the long sleep.

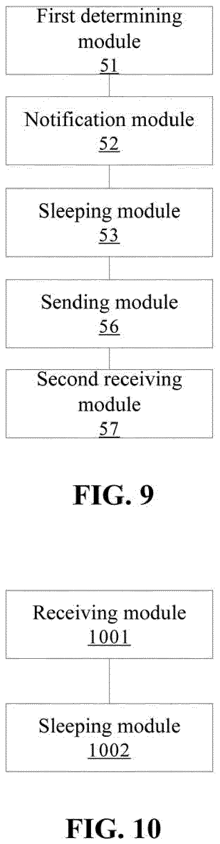

Fig. 9 is the fourth particular structural block diagram of a sleeping device according to a preferred embodiment of the present invention; as shown in Fig. 9, the above-mentioned sleeping device also comprises: a sending module **56** connected to the sleeping module **53**, configured to send the second radio frame after waking up from the long sleep, with the second radio frame being used for requesting the access point to send data buffered for the station when the station is in the long sleep; and a second receiving module **57**, connected to the sending module **56**, configured to receive the buffer data sent by the access point.

The embodiment of the present invention provides a sleeping device, applied to a station, and the sleeping device may be used to realize the above-mentioned sleeping method as shown in Fig. 3. Fig. 10 is the second structural block diagram of the sleeping device according an embodiment of the present invention. As shown in Fig. 10, the device comprises a receiving module **1001** and a sleeping module **1002.** The structure thereof is described in details below.

The receiving module **1001** is configured to receive a first sleeping time from an access point, with the first sleeping time being used for indicating the time when the station enters a long sleep; and the sleeping module **1002**, connected to the receiving module **1001**, is set to enter the long sleep according to the first sleeping time of the receiving module **1001**.

It should be noted that the sleeping device described in the device embodiments corresponds to the method embodiments, with the specific implementation described in the method embodiment in detail, thereby needing no further description.

In summary, according to the above-mentioned embodiments of the present invention, a sleeping method and device is provided. In the present invention, the station informs the first longest sleeping time to the access point, which enables the access point to buffer data for the station according to the first longest sleeping time, and at the same time, the access point may acquire the state of the station, which saves the cost for sending service indication information.

Obviously, those skilled in the art should know that each of the mentioned modules or steps of the present invention may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device, or may be independently manufactured as each integrated circuit module, or multiple modules or steps thereof may be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention which is defined by the appended claims.

## Claims

1. A sleeping method, applied to a station operating in a wireless network comprising:
determining (S202), by the station, a first sleeping time for the station to enter a long sleep, wherein the long sleep refers to a case where the station is in a doze state of not receiving buffer indication information sent by an access point;
informing (S204), by the station, an access point of the first sleeping time; and
entering (S206), by the station, the long sleep according to the first sleeping time;
**characterized in that** after the station enters (S206) the long sleep according to the first sleeping time, the method further comprises:
during the first sleeping time, entering, by the station, an awake state at least once and sending a third radio frame to the access point;
receiving, by the station, buffer data from the access point; or,
receiving an acknowledgement frame from the access point, wherein the acknowledgement frame carries indication information for indicating whether the buffer data exists, and if the buffer data exists, the station receiving the buffer data when the access point obtains a channel access chance.

2. The method according to claim 1, wherein informing (S204), by the station, the access point of the first sleeping time comprises: sending, by the station, a first radio frame to the access point, wherein the first radio frame carries the first sleeping time.

3. The method according to claim 1, wherein before the station informs (S204) the access point of the first sleeping time, the method further comprises: sending, by the station, to the access point capability information about whether the station itself has a capability of long sleep.

4. The method according to claim 3, wherein the station uses the first radio frame to carry the capability information about whether the station itself has the capability of long sleep.

5. The method according to claim 2 or 4, wherein the first radio frame comprises one of the following: an association request frame, a reassociation request frame, a channel probe request frame, and a notification frame sent to the access point by the station when entering the long sleep.

6. The method according to any one of claims 1 to 5, wherein before the station enters (S206) the long sleep according to the first sleeping time, the method further comprises:
receiving, by the station, a second radio frame from the access point, wherein the second radio frame carries a second sleeping time; and
determining, by the station, a sleeping time for performing the long sleep according to the second sleeping time.

7. The method according to claim 6, wherein before the station receives the second sleeping time from the access point, the method further comprises: sending, by the access point, to the station capability information about whether the access point itself supports a capability of long sleep of the station;
preferably, the access point uses a second radio frame to carry the capability information about whether the access point itself supports a capability of long sleep of the station.

8. The method according to claim 6, wherein the second radio frame comprises one of the following: an association response frame, a reassociation response frame, a channel probe response frame, a response frame for a notification frame sent to the access point by the station when entering the long sleep, and a beacon frame.

9. The method according to claim 6, wherein the station determining the sleeping time for entering the long sleep according to the second sleeping time comprises: if the first sleeping time is different from the second sleeping time, determining the second sleeping time to be the sleeping time for performing the long sleep;
after the station enters the long sleep according to the second sleeping time, the method further comprises:
during the second sleeping time, entering, by the station, an awake state at least once and sending a third radio frame to the access point;
receiving, by the station, buffer data from the access point; or,
receiving an acknowledgement frame from the access point, wherein the acknowledgement frame carries indication information for indicating whether the buffer data exists, and if the buffer data exists, the station receiving the buffer data when the access point obtains a channel access chance.

10. The method according to claim 1, wherein after the station enters the long sleep according to the first sleeping time or the second sleeping time, the method further comprises: the station buffers unicast data for the station according to at least one of the following parameters: the sleeping time of the station, priority of the data, discard strategy of the data and a size of a buffer area of the access point.

11. A sleeping method, applied to a station operating in a wireless network comprising:
receiving (S302), by the station, a first sleeping time from an access point, wherein the first sleeping time is used for indicating time when the station enters a long sleep, wherein the long sleep refers to a case where the station is in a doze state of not receiving buffer indication information sent by an access point; and
entering (S304), by the station, the long sleep according to the first sleeping time; **characterized in that** after the station enters (S304) the long sleep according to the first sleeping time, the method further comprises:
during the first sleeping time, entering, by the station, an awake state at least once and sending a third radio frame to the access point;
receiving, by the station, buffer data from the access point; or,
receiving an acknowledgement frame from the access point, wherein the acknowledgement frame carries indication information for indicating whether the buffer data exists, and if the buffer data exists, the station receiving the buffer data when the access point obtains a channel access chance.

12. The method according to claim 11, wherein receiving (S302), by the station, a first sleeping time from the access point comprises: receiving, by the station, the first sleeping time from the access point via a first radio frame, wherein the first radio frame comprises one of the following: an association response frame, a reassociation response frame, a channel probe response frame, a beacon frame, a response frame for a notification frame of entering the long sleep, and the access point uses the first radio frame to carry capability information for indicating whether the access point itself supports the capability of long sleep of the station.

13. The method according to claim 11, wherein before the station receives (S302) the first sleeping time when the station enters the long sleep from the access point, the method further comprises: sending, by the station, a second radio frame to the access point, wherein the second radio frame comprises one of the following: an association request frame, a reassociation request frame, a channel probe request frame, and a notification frame sent to the access point by the station when entering the long sleep; and the station using the second radio frame to carry capability information for indicating whether the station itself has a capability of long sleep and information for indicating whether the access point needs to inform the buffer condition of the station via a TIM.

14. A sleeping processing device, located in a station, the sleeping processing device comprising:
a first determining module (51) configured to determine a first sleeping time for the station to enter a long sleep, wherein the long sleep refers to a case where the station is in a doze state of not receiving buffer indication information sent by an access point;
a notification module (52) configured to inform an access point of the first sleeping time; and
a sleeping module (53) configured to enter the long sleep according to the first sleeping time; **characterized in that** after the sleeping module (53) enters the long sleep according to the first sleeping time, the sleeping processing device is further configured to:
during the first sleeping time, enter an awake state at least once and sending a third radio frame to the access point;
receive buffer data from the access point; or,
receive an acknowledgement frame from the access point, wherein the acknowledgement frame carries indication information for indicating whether the buffer data exists, and if the buffer data exists, the station receiving the buffer data when the access point obtains a channel access chance.

15. A sleeping processing device, located in a station, the sleeping processing device comprising:
a receiving module (1001) configured to receive a first sleeping time from an access point, wherein the first sleeping time is used for indicating time when the station enters a long sleep, wherein the long sleep refers to a case where the station is in a doze state of not receiving buffer indication information sent by an access point; and
a sleeping module (1002) configured to enter the long sleep according to the first sleeping time; **characterized in that** after the sleeping module (1002) enters the long sleep according to the first sleeping time, the sleeping processing device is further configured to:
during the first sleeping time, enter an awake state at least once and sending a third radio frame to the access point;
receive buffer data from the access point; or,
receive an acknowledgement frame from the access point, wherein the acknowledgement frame carries indication information for indicating whether the buffer data exists, and if the buffer data exists, the station receiving the buffer data when the access point obtains a channel access chance.

## Patentansprüche

1. Ruheverfahren, das auf eine Station angewendet wird, die in einem drahtlosen Netzwerk arbeitet, umfassend:
durch die Station Ermitteln (S202) einer ersten Ruhezeit für die Station, um in eine lange Ruhe einzutreten, wobei sich die lange Ruhe auf einen Fall bezieht, bei dem sich die Station in einem Stromsparzustand (Doze) befindet, in dem sie keine Pufferanzeigeinformationen empfängt, die durch einen Zugangspunkt gesendet wurden;
durch die Station Informieren (S204) eines Zugangspunktes über die erste Ruhezeit; und
durch die Station Eintreten (S206) in die lange Ruhe entsprechend der ersten Ruhezeit;
**dadurch gekennzeichnet, dass** das Verfahren nach dem Eintritt (S206) der Station in die lange Ruhe gemäß der ersten Ruhezeit ferner umfasst:
durch die Station während der ersten Ruhezeit mindestens einmaliges Eintreten in einen Wachzustand und Senden eines dritten Funk-Frame an den Zugangspunkt;
durch die Station Empfangen von Pufferdaten vom Zugangspunkt; oder,
Empfangen eines Quittierungs-Frame vom Zugangspunkt, wobei der Quittierungs-Frame Anzeigeinformationen transportiert, um anzuzeigen, ob die Pufferdaten vorhanden sind, und wenn die Pufferdaten vorhanden sind, Empfangen der Pufferdaten durch die Station, wenn der Zugriffspunkt eine Kanalzugriffsmöglichkeit erhält.

2. Verfahren nach Anspruch 1, wobei das Informieren (S204) des Zugangspunkts der ersten Ruhezeit durch die Station umfasst: Senden eines ersten Funk-Frame an den Zugangspunkt durch die Station, wobei der erste Funk-Frame die erste Ruhezeit transportiert.

3. Verfahren nach Anspruch 1, wobei das Verfahren, bevor die Station den Zugangspunkt über die erste Ruhezeit informiert (S204), ferner umfasst: durch die Station Senden von Fähigkeitsinformationen an den Zugriffspunkt darüber, ob die Station selbst eine Fähigkeit zu langer Ruhe aufweist.

4. Verfahren nach Anspruch 3, wobei die Station den ersten Funk-Frame verwendet, um die Fähigkeitsinformationen darüber zu transportieren, ob die Station selbst die Fähigkeit zur langen Ruhe aufweist.

5. Verfahren nach Anspruch 2 oder 4, wobei der erste Funk-Frame eines aus Folgendem umfasst: einen Zuordnungsanforderungs-Frame, einen Wiederzuordnungsanforderungs-Frame, einen Kanalsondierungsanforderungs-Frame und einen Benachrichtigungs-Frame, der durch die Station an den Zugangspunkt gesendet wird, wenn sie in die lange Ruhe eintritt.

6. Verfahren nach einem der Ansprüche 1 bis 5, wobei das Verfahren nach dem Eintritt (S206) der Station in die lange Ruhe gemäß der ersten Ruhezeit ferner umfasst:
durch die Station Empfangen eines zweiten Funk-Frame vom Zugangspunkt, wobei der zweite Funk-Frame eine zweite Ruhezeit transportiert; und
durch die Station Ermitteln einer Ruhezeit zum Durchführen der langen Ruhe gemäß der zweiten Ruhezeit.

7. Verfahren nach Anspruch 6, wobei das Verfahren, bevor die Station die zweite Ruhezeit vom Zugangspunkt empfängt, ferner umfasst: Senden von Fähigkeitsinformationen durch den Zugangspunkt an die Station darüber, ob der Zugangspunkt selbst eine Fähigkeit der langen Ruhe der Station unterstützt;
wobei der Zugangspunkt vorzugsweise einen zweiten Funk-Frame verwendet, um die Fähigkeitsinformationen darüber zu transportieren, ob der Zugangspunkt selbst eine Fähigkeit der langen Ruhe der Station unterstützt.

8. Verfahren nach Anspruch 6, wobei der zweite Funk-Frame eines aus Folgendem umfasst: einem Zuordnungsantwort-Frame, einen Wiederzuordnungsantwort-Frame, einem Kanalsondierungsantwort-Frame und einen Antwort-Frame für einen Benachrichtigungs-Frame, der durch die Station an den Zugangspunkt gesendet wird, wenn sie in die lange Ruhe eintritt, und einen Beacon-Frame.

9. Verfahren nach Anspruch 6, wobei die Station, die die Ruhezeit zum Eintreten in die lange Ruhe gemäß der zweiten Ruhezeit ermittelt, Folgendes umfasst: Ermitteln der zweiten Ruhezeit als Ruhezeit für die lange Ruhe, wenn sich die erste Ruhezeit von der zweiten Ruhezeit unterscheidet;
wobei das Verfahren nach dem Eintritt der Station in die lange Ruhe gemäß der zweiten Ruhezeit ferner umfasst:
durch die Station während der zweiten Ruhezeit mindestens einmaliges Eintreten in einen Wachzustand und Senden eines dritten Funk-Frame an den Zugangspunkt;
durch die Station Empfangen von Pufferdaten vom Zugangspunkt; oder,
Empfangen eines Quittierungs-Frame vom Zugangspunkt, wobei der Quittierungs-Frame Anzeigeinformationen transportiert, um anzuzeigen, ob die Pufferdaten vorhanden sind, und wenn die Pufferdaten vorhanden sind, Empfangen der Pufferdaten durch die Station, wenn der Zugriffspunkt eine Kanalzugriffsmöglichkeit erhält.

10. Verfahren nach Anspruch 1, wobei das Verfahren nach dem Eintritt der Station in die lange Ruhe gemäß der ersten Ruhezeit oder der zweiten Ruhezeit ferner umfasst: durch die Station Puffern von Unicast-Daten für die Station gemäß mindestens einem der folgenden Parameter: der Ruhezeit der Station, der Priorität der Daten, der Verwerfungsstrategie der Daten und der Größe eines Pufferbereichs des Zugangspunkts.

11. Ruheverfahren, das auf eine Station angewendet wird, die in einem drahtlosen Netzwerk arbeitet, umfassend:
durch die Station Empfangen (S302) einer ersten Ruhezeit von einem Zugangspunkt, wobei die erste Ruhezeit zum Anzeigen der Zeit verwendet wird, wann die Station in eine lange Ruhe eintritt, wobei sich die lange Ruhe auf einen Fall bezieht, bei dem sich die Station in einem Doze-Zustand des Nichtempfangens von Pufferanzeigeinformationen befindet, die durch einen Zugangspunkt gesendet wurden; und
durch die Station Eintreten (S304) in die lange Ruhe entsprechend der ersten Ruhezeit;
**dadurch gekennzeichnet, dass** das Verfahren nach dem Eintritt (S304) der Station in die lange Ruhe gemäß der ersten Ruhezeit ferner umfasst:
durch die Station während der ersten Ruhezeit mindestens einmaliges Eintreten in einen Wachzustand und Senden eines dritten Funk-Frame an den Zugangspunkt;
durch die Station Empfangen von Pufferdaten vom Zugangspunkt; oder,
Empfangen eines Quittierungs-Frame vom Zugangspunkt, wobei der Quittierungs-Frame Anzeigeinformationen transportiert, um anzuzeigen, ob die Pufferdaten vorhanden sind, und wenn die Pufferdaten vorhanden sind, Empfangen der Pufferdaten durch die Station, wenn der Zugriffspunkt eine Kanalzugriffsmöglichkeit erhält.

12. Verfahren nach Anspruch 11, wobei das Empfangen (S302) einer ersten Ruhezeit vom Zugangspunkt durch die Station umfasst: durch die Station Empfangen der ersten Ruhezeit vom Zugangspunkt über einen ersten Funk-Frame, wobei der erste Funk-Frame eines aus Folgendem umfasst; einen Zuordnungsantwort-Frame, einen Wiederzuordnungsantwort-Frame, einen Kanalsondierungsantwort-Frame, einen Beacon-Frame, einen Antwort-Frame für einen Benachrichtigungs-Frame zum Eintreten in die lange Ruhe, und der Zugangspunkt den ersten Funk-Frame verwendet, um Fähigkeitsinformationen zu transportieren, um anzuzeigen, ob der der Zugangspunkt selbst die Fähigkeit der langen Ruhe der Station unterstützt.

13. Verfahren nach Anspruch 11, wobei das Verfahren, bevor die Station vom Zugangspunkt die erste Ruhezeit empfängt (S302), zu der die Station in die lange Ruhe eintritt, ferner umfasst: durch die Station Senden eines zweiten Funk-Frame an den Zugangspunkt, wobei der zweite Funk-Frame eines aus Folgendem umfasst: einen Zuordnungsanforderungs-Frame, einen Wiederzuordnungsanforderungs-Frame, einen Kanalsondierungsanforderungs-Frame und einen Benachrichtigungs-Frame, der durch die Station beim Eintreten in die lange Ruhe an den Zugangspunkt gesendet wird; und die Station, die den zweiten Funk-Frame verwendet, um Fähigkeitsinformationen zu transportieren. um anzuzeigen, ob die Station selbst die Fähigkeit zur langen Ruhe aufweist, sowie Informationen, um anzuzeigen, ob der Zugangspunkt den Pufferzustand der Station über eine Traffic Indication Map (TIM) mitteilen muss.

14. Ruheverarbeitungsvorrichtung, die sich in einer Station befindet, wobei die Ruheverarbeitungsvorrichtung umfasst:
ein erstes Ermittlungsmodul (51), das konfiguriert ist, um eine erste Ruhezeit für die Station zum Eintritt in eine lange Ruhe zu ermitteln, wobei sich die lange Ruhe auf einen Fall bezieht, bei dem sich die Station in einem Doze-Zustand befindet, in dem sie keine Pufferanzeigeinformationen empfängt, die durch einen Zugangspunkt gesendet wurden;
ein Benachrichtigungsmodul (52), das konfiguriert ist, um einen Zugangspunkt über die erste Ruhezeit zu informieren; und
ein Ruhemodul (53), das konfiguriert ist, um in die lange Ruhe gemäß der ersten Ruhezeit einzutreten;
**dadurch gekennzeichnet, dass** die Ruheverarbeitungsvorrichtung nach dem Eintritt des Ruhemoduls (53) in die lange Ruhe gemäß der ersten Ruhezeit ferner konfiguriert ist, um:
während der ersten Ruhezeit mindestens einmal in einen Wachzustand einzutreten und einen dritten Funk-Frame an den Zugangspunkt zu senden;
Pufferdaten vom Zugangspunkt zu empfangen; oder,
einen Quittierungs-Frame vom Zugangspunkt zu empfangen, wobei der Quittierungs-Frame Anzeigeinformationen transportiert, die anzeigen, ob die Pufferdaten vorhanden sind, und wenn die Pufferdaten vorhanden sind, die Station die Pufferdaten empfängt, wenn der Zugriffspunkt eine Kanalzugriffsmöglichkeit erhält.

15. Ruheverarbeitungsvorrichtung, die sich in einer Station befindet, wobei die Ruheverarbeitungsvorrichtung umfasst:
ein Empfangsmodul (1001), das konfiguriert ist, um eine erste Ruhezeit von einem Zugangspunkt zu empfangen, wobei die erste Ruhezeit zum Anzeigen der Zeit verwendet wird, wann die Station in eine lange Ruhe eintritt, wobei sich die lange Ruhe auf einen Fall bezieht, bei dem sich die Station in einem Doze-Zustand des Nichtempfangens von Pufferanzeigeinformationen befindet, die durch einen Zugangspunkt gesendet wurden; und
ein Ruhemodul (1002), das konfiguriert ist, um in die lange Ruhe gemäß der ersten Ruhezeit einzutreten;
**dadurch gekennzeichnet, dass** die Ruheverarbeitungsvorrichtung nach dem Eintritt des Ruhemoduls (1002) in die lange Ruhe gemäß der ersten Ruhezeit ferner konfiguriert ist, um:
während der ersten Ruhezeit mindestens einmal in einen Wachzustand einzutreten und einen dritten Funk-Frame an den Zugangspunkt zu senden;
Pufferdaten vom Zugangspunkt zu empfangen; oder,
einen Quittierungs-Frame vom Zugangspunkt zu empfangen, wobei der Quittierungs-Frame Anzeigeinformationen transportiert, die anzeigen, ob die Pufferdaten vorhanden sind, und wenn die Pufferdaten vorhanden sind, die Station die Pufferdaten empfängt, wenn der Zugriffspunkt eine Kanalzugriffsmöglichkeit erhält.

## Revendications

1. Procédé de sommeil appliqué à une station fonctionnant dans un réseau sans fil comprenant :
la détermination (S202), par la station, d'un premier temps de sommeil avant que la station n'entre dans un sommeil long, le sommeil long se rapportant à un cas où la station est dans un état d'assoupissement où elle ne reçoit pas d'informations d'indication de tampon envoyées par un point d'accès ;
l'information (S204), par la station, d'un point d'accès du premier temps de sommeil ; et
l'entrée (S206), par la station, dans le sommeil long en fonction du premier temps de sommeil ;
**caractérisé en ce que**, après que la station est entrée (S206) dans le sommeil long en fonction du premier temps de sommeil, le procédé consistant en outre à :
pendant le premier temps de sommeil, entrer, par la station, dans un état éveillé au moins une fois et envoyer une troisième trame radio au point d'accès ;
recevoir, par la station, des données de tampon à partir du point d'accès ; ou
recevoir une trame d'accusé de réception à partir du point d'accès, la trame d'accusé de réception portant des informations d'indication afin d'indiquer si les données de tampon existent et, si les données de tampon existent, la station reçoit les données de tampon lorsque le point d'accès obtient une chance d'accéder au canal.

2. Procédé selon la revendication 1, l'information (S204), par la station, du point d'accès du premier temps de sommeil comprenant : l'envoi, par la station, d'une première trame radio au point d'accès, la première trame radio portant le premier temps de sommeil.

3. Procédé selon la revendication 1, avant que la station n'informe (S204) le point d'accès du premier temps de sommeil, le procédé consistant en outre à : envoyer au point d'accès, par la station, des informations de capacité indiquant si la station a elle-même une capacité de sommeil long.

4. Procédé selon la revendication 3, la station utilisant la première trame radio pour porter les informations de capacité pour savoir si la station elle-même a la capacité d'un sommeil long.

5. Procédé selon la revendication 2 ou 4, la première trame radio comprenant l'un des éléments suivants : une trame de requête d'association, une trame de requête de réassociation, une trame de requête de sonde de canal et une trame de notification envoyées au point d'accès par la station lorsqu'elle entre dans le sommeil long.

6. Procédé selon l'une quelconque des revendications 1 à
5, avant que la station n'entre (S206) dans le sommeil long en fonction du premier temps de sommeil, le procédé comprend en outre :
la réception, par la station, d'une deuxième trame radio à partir du point d'accès, la deuxième trame radio portant un second temps de sommeil ; et
la détermination, par la station, d'un temps de sommeil afin d'effectuer le sommeil long en fonction du second temps de sommeil.

7. Procédé selon la revendication 6, avant que la station ne reçoive le second temps de sommeil à partir du point d'accès, le procédé consiste en outre à : envoyer à la station, par le point d'accès, des informations de capacité pour savoir si le point d'accès lui-même prend en charge une capacité de sommeil long de la station ;
de préférence, le point d'accès utilise une deuxième trame radio pour porter les informations de capacité pour savoir si le point d'accès lui-même prend en charge une capacité de sommeil long de la station.

8. Procédé selon la revendication 6, la deuxième trame radio comprenant l'un des éléments suivants : une trame de réponse d'association, une trame de réponse de réassociation, une trame de réponse de sonde de canal et une trame de réponse pour une trame de notification envoyées au point d'accès par la station lorsqu'elle entre dans le sommeil long, ainsi qu'une trame balise.

9. Procédé selon la revendication 6, la station déterminant le temps de sommeil afin d'entrer dans le sommeil long en fonction du second temps de sommeil comprenant : si le premier temps de sommeil est différent du second temps de sommeil, déterminer le second temps de sommeil comme étant le temps de sommeil afin d'effectuer le sommeil long ;
une fois que la station est entrée dans le sommeil long en fonction du second temps de sommeil, le procédé comprend en outre :
pendant le second temps de sommeil, l'entrée, par la station, dans un état d'éveil au moins une fois et l'envoi d'une troisième trame radio au point d'accès ;
recevoir, par la station, des données de tampon à partir du point d'accès ; ou
recevoir une trame d'accusé de réception à partir du point d'accès, la trame d'accusé de réception portant des informations d'indication afin d'indiquer si les données de tampon existent et, si les données de tampon existent, la station reçoit les données de tampon lorsque le point d'accès obtient une chance d'accéder au canal.

10. Procédé selon la revendication 1, après que la station entre dans le sommeil long en fonction du premier temps de sommeil ou du second temps de sommeil, le procédé comprenant en outre : la station met en mémoire tampon des données de diffusion individuelle pour la station en fonction d'au moins l'un des paramètres suivants : le temps de sommeil de la station, la priorité des données, la stratégie de rejet des données et la taille d'une zone tampon du point d'accès.

11. Procédé de sommeil appliqué à une station fonctionnant dans un réseau sans fil comprenant :
la réception (S302), par la station, d'un premier temps de sommeil à partir d'un point d'accès, le premier temps de sommeil étant utilisé pour indiquer le moment où la station entre dans un sommeil long, le sommeil long se rapportant à un cas dans lequel la station est dans un état d'assoupissement ne recevant pas d'informations d'indication de tampon envoyées par un point d'accès ; et
l'entrée (S304), par la station, dans le sommeil long en fonction du premier temps de sommeil ;
**caractérisé en ce que**, après que la station est entrée (S304) dans le sommeil long en fonction du premier temps de sommeil, le procédé consistant en outre à :
pendant le premier temps de sommeil, entrer, par la station, dans un état éveillé au moins une fois et envoyer une troisième trame radio au point d'accès ;
recevoir, par la station, des données de tampon à partir du point d'accès ; ou
recevoir une trame d'accusé de réception à partir du point d'accès, la trame d'accusé de réception portant des informations d'indication afin d'indiquer si les données de tampon existent et, si les données de tampon existent, la station reçoit les données de tampon lorsque le point d'accès obtient une chance d'accéder au canal.

12. Procédé selon la revendication 11, la réception (S302), par la station, d'un premier temps de sommeil à partir du point d'accès comprenant : la réception, par la station, du premier temps de sommeil à partir du point d'accès par l'intermédiaire d'une première trame radio, la première trame radio comprenant l'un des éléments suivants : une trame de réponse d'association, une trame de réponse de réassociation, une trame de réponse de sonde de canal, une trame balise, une trame de réponse pour une trame de notification d'entrée en sommeil long et le point d'accès utilise la première trame radio pour porter des informations de capacité pour indiquer si le point d'accès lui-même prend en charge la capacité de sommeil long de la station.

13. Procédé selon la revendication 11, avant que la station ne reçoive (S302) le premier temps de sommeil lorsque la station entre dans le sommeil long à partir du point d'accès, le procédé comprend en outre : l'envoi, par la station, d'une deuxième trame radio au point d'accès, la deuxième trame radio comprenant l'un des éléments suivants : une trame de requête d'association, une trame de requête de réassociation, une trame de requête de sonde de canal et une trame de notification envoyée au point d'accès par la station lors de l'entrée dans le sommeil long ; et la station utilise la deuxième trame radio pour porter des informations de capacité afin d'indiquer si la station elle-même a une capacité de sommeil long et des informations pour indiquer si le point d'accès doit informer de la condition de tampon de la station par l'intermédiaire d'un TIM.

14. Dispositif de traitement de sommeil, situé dans une station, le dispositif de traitement de sommeil comprenant :
un premier module de détermination (51) configuré pour déterminer un premier temps de sommeil pour que la station entre dans un sommeil long, le sommeil long se réfère à un cas où la station est dans un état d'assoupissement ne recevant pas d'informations d'indication de tampon envoyées par un point d'accès ;
un module de notification (52) configuré pour informer un point d'accès du premier temps de sommeil ; et
un module de sommeil (53) configuré pour entrer dans le sommeil long en fonction du premier temps de sommeil ;
**caractérisé en ce que**, après que le module de sommeil (53) entre dans le sommeil long en fonction du premier temps de sommeil, le dispositif de traitement de sommeil est en outre configuré pour :
pendant le premier temps de sommeil, entrer au moins une fois dans l'état éveillé et envoyer une troisième trame radio au point d'accès ;
recevoir des données de tampon à partir du point d'accès ; ou
recevoir une trame d'accusé de réception à partir du point d'accès, la trame d'accusé de réception portant des informations d'indication pour indiquer si les données de tampon existent et, si les données de tampon existent, la station reçoit les données de tampon lorsque le point d'accès obtient une chance d'accéder au canal.

15. Dispositif de traitement de sommeil, situé dans une station, le dispositif de traitement de sommeil comprenant :
un module de réception (1001) configuré pour recevoir un premier temps de sommeil à partir d'un point d'accès, le premier temps de sommeil étant utilisé pour indiquer le moment où la station entre dans un sommeil long, le sommeil long se rapportant à un cas où la station est dans un état d'assoupissement ne recevant pas d'informations d'indication de tampon envoyées par un point d'accès ; et
un module de sommeil (1002) configuré pour entrer dans le sommeil long en fonction du premier temps de sommeil ;
**caractérisé en ce que**, après que le module de sommeil (1002) entre dans le sommeil long en fonction du premier temps de sommeil, le dispositif de traitement de sommeil est en outre configuré pour :
pendant le premier temps de sommeil, entrer au moins une fois dans l'état éveillé et envoyer une troisième trame radio au point d'accès ;
recevoir des données de tampon à partir du point d'accès ; ou
recevoir une trame d'accusé de réception à partir du point d'accès, la trame d'accusé de réception portant des informations d'indication pour indiquer si les données de tampon existent et, si les données de tampon existent, la station reçoit les données de tampon lorsque le point d'accès obtient une chance d'accéder au canal.
